# EUROPEAN PATENT SPECIFICATION

(11) **EP 2 224 130 B1**
(45) Date of publication and mention of the grant of the patent: **05.10.2016**
(21) Application number: 10002051.0
(22) Date of filing: 01.03.2010
(51) Int. Cl.: F25B 1/06, F03D 80/00, F03D 9/10

(54) **A wind turbine and method for cooling a heat generating component of a wind turbine**
Windturbine und Verfahren zum Kühlen einer wärmeerzeugenden Komponente einer Windturbine
Éolienne et procédé de refroidissement d'un composant à génération thermique d'une éolienne

(30) Priority: 27.02.2009 DK 200900276; 27.02.2009 US 156111 P
(43) Date of publication of application: 01.09.2010
(73) Proprietor: Vestas Wind Systems A/S, 8200 Aarhus N (DK)
(72) Inventor: Buus, Thomas, Paw, 8643 Ans By (DK)
(74) Representative: Inspicos P/S

(56) References cited:
- EP-A1- 0 020 146
- WO-A1-03/065781
- WO-A1-2004/006376
- SU-A1- 589 530
- US-A1- 2004 069 012

## Description

### Background of the invention

The invention relates to a wind turbine comprising one or more heat generating components and a method for cooling a heat generating component of a wind turbine.

### Description of the Related Art

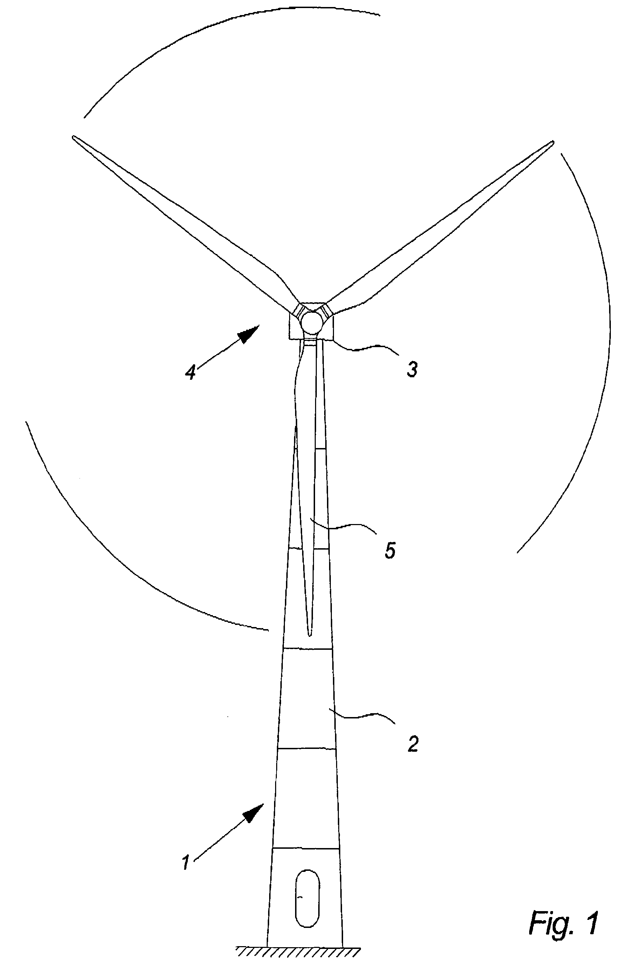

A wind turbine known in the art typically comprises a wind turbine tower and a wind turbine nacelle positioned on top of the tower. A wind turbine rotor, comprising three wind turbine blades, is connected to the nacelle through a low speed shaft, which extends out of the nacelle front as illustrated on figure 1.

Controlling the temperature of electrical and mechanical heat generating components - particularly during operation of the components - has always been a problem and especially within the art of wind turbines, this problem has been profound.

Often the same wind turbine type has to be able to operate in both extremely hot and extremely cold areas of the globe, which makes heavy demands on the wind turbine's system for controlling the temperature of especially the gear, generator and power handling equipment located in or at the wind turbine but to some degree also of other equipment such as control cabinets, bearings, hydraulic systems, motors and other heat generating components.

Even though modem wind turbines have become more and more efficient in converting the rotation of the wind turbine rotor into electrical power, this process will always result in some of the energy being converted to heat in some of the wind turbine components. This excess heat must be removed from the components to protect the components and for them to function properly. Traditionally this has been done by creating an air flow of air from the outside of the wind turbine which passes the components and/or by means of one or more cooling systems comprising a circulating cooling medium which can transport the heat substantially undisturbed from the heat generating components to a heat sink e.g. in the form of a radiator, which can give off the heat to the surroundings of the wind turbine - such as the air - where after the cold cooling medium is returned substantially undisturbed to the components.

However, modern wind turbines get bigger and bigger in power output and thereby often also in production of excess heat and this matched with the fact that air is a relatively poor conductor of heat, make these types of cooling systems very large, expensive and heavy.

Regarding offshore wind turbines it is therefore known to use seawater to cool different components of the wind turbine, but if the cooling system is open there are serious problems regarding ice, clogging, corrosion and other, which are difficult and expensive to solve, and if the system is closed e.g. by circulating the cooling medium through a hose placed in the seawater there is ice, storm, overgrowing and other problems to be solved. The problems of both these systems are complicated and expensive to overcome and no matter how it is done, this technique is only feasible in relation to offshore wind energy converters.

In the field of automotive engineering it is known (e.g. from EP0020146) to use ejector cooling systems to utilize otherwise wasted heat from an engine to produce refrigeration of cabin without requiring additional shaft power from the engine.

An object of the invention is therefore to provide for an advantageous technique for cooling heat generating components of a wind turbine.

### The invention

The invention provides for a wind turbine comprising one or more heat generating components and at least one closed cooling circuit comprising a circulating cooling medium. The cooling circuit is arranged to cool a first heat generating component of one or more heat generating components and at least a part of said heat for operating the ejector cooling system is directly or indirectly provided by a second heat generating component of said one or more heat generating components.

Using heat generated by one or more of the heat generating components of the wind turbine to operate the ejector cooling system is advantageous in that this heat is an excess product which is difficult and expensive to remove from the wind turbine. Furthermore, the more cooling is needed, the more excess heat is produced by the heat generating components and the more heat can be delivered to operate the ejector cooling system, i.e. the cooling capacity is increased with the demand.

It should be emphasised that by the term *"arranged to directly or indirectly cool"* is to be understood that the cooling circuit can comprise one or more heat generating components which are directly cooled by the cooling fluid circulating in the closed cooling circuit or the cooling circuit could be arranged to cool a further medium, object, device or other which then in turn would be arranged to cool the one or more heat generating components indirectly.

In an aspect of the invention, said ejector cooling system comprises an ejector for increasing the pressure of said cooling medium in said at least one closed cooling circuit and wherein said ejector increases the pressure of said cooling medium between 5 and 5000 %, preferably between 50 and 1000 % and most preferred between 100 and 500 %.

If the ejector increases the pressure of the cooling medium too much, the temperature of the cooling medium would have to be reduced below the ambient temperature at most wind turbine sites around the globe, making it difficult and expensive to ensure that the pressurised cooling fluid subsequently can be condensed. If the pressure of the cooling medium is increased too little, the efficiency of the ejector cooling system is reduced. The present pressure ranges therefore present an advantageous relationship between cost and efficiency.

In an aspect of the invention, said ejector comprises a motive fluid inlet and wherein a motive fluid introduced through said motive fluid inlet during normal operation of said ejector is a portion of said cooling medium or created from a portion of said cooling medium.

Supplying the motive fluid to the ejector as a portion of the cooling medium is advantageous in that the ejector design and the cooling circuit layout become much more simple and inexpensive.

It should be emphasised that by the term *"normal operation"* is to be understood that the cooling medium is circulating in the closed cooling circuit to cool a heat generating component and the ejector is increasing the pressure of the cooling medium.

In an aspect of the invention, a pressure of said portion of said cooling medium is increased by means of a pump.

Increasing the pressure of the cooling medium by means of a pump is advantageous in that pumping is a simple and inexpensive way of increasing the pressure of a cooling medium.

In an aspect of the invention, said pressure of said portion is arranged to be increased while said cooling fluid is in a liquid phase.

Liquids are by nature substantially incompressible and compared with gasses-which by nature are compressible - it is therefore much easier and efficient to increase the pressure of a liquid than of a gas.

In an aspect of the invention, said ejector cooling system comprises a heating device arranged for increasing the pressure of said motive fluid before it enters said motive fluid inlet.

Increasing the pressure of the motive fluid by means of a heating device is advantageous in that it provides for a simple and inexpensive way for increasing the pressure of the motive fluid before it enters ejector whereby the efficiency of the ejector is increased.

In an aspect of the invention, said cooling circuit is arranged to cool a first heat generating component of said one or more heat generating components and wherein at least a part of said heat for operating said ejector cooling system is directly or indirectly provided by said first heat generating component of said one or more heat generating components.

Using heat to operate the ejector cooling system supplied from the same heat generating component which is to be cooled by the ejector cooling system is advantageous in that it provides for a more simple and inexpensive cooling circuit design and in that the more cooling is needed, the more heat to operate the ejector cooling system is produced.

According to the invention, said cooling circuit is arranged to cool a first heat generating component of said one or more heat generating components and wherein at least a part of said heat for operating said ejector cooling system is directly or indirectly provided by a second heat generating component of said one or more heat generating components.

A typical wind turbine contains several major heat generating components which are all producing more heat as the demand for cooling increases. It can therefore be advantageous to cool one or more heat generating components by making them provide the heat for operation an ejector cooling system for cooling one or more further heat generating components.

In an aspect of the invention, said ejector cooling system comprises a condenser for promoting a phase change of said cooling medium.

A phase change of a cooling medium demands much energy and therefore reduces the temperature of the cooling medium significantly at constant pressure. Providing the ejector cooling system with a condenser for promoting a phase change of the cooling medium is therefore advantageous in that a condenser is a very efficient way of reducing the temperature of the cooling medium.

In an aspect of the invention, said ejector cooling system comprises an expansion valve for relieving a pressure of said cooling medium.

An expansion valve is a simple and effective mean for relieving the pressure of a cooling medium and thereby a simple and effective way of also reducing the temperature of the cooling medium to provide for a more efficient ejector cooling system.

In an aspect of the invention, said cooling medium is water.

Water is non-toxic, inexpensive and easily available. Furthermore, water changes phases at pressures and temperatures which makes it particularly advantageous to use water as the cooling medium in relation with ejector cooling systems.

In an aspect of the invention, said wind turbine comprises at least two closed cooling circuits and wherein a first cooling circuit of said at least two closed cooling circuits is arranged to directly cool said heat generating components and a second cooling circuit of said at least two closed cooling circuits comprises said ejector cooling system and wherein said first cooling circuit and said second cooling circuit are arranged to exchange heat.

E.g. if the heat generating component to be cooled is a gearbox, the cooling medium would advantageously be the oil circulating in the gearbox. However, oil is not an advantageous cooling medium in relation with ejector cooling systems and therefore, if the cooling medium of the heat generating component is not advantageous in relation with the ejector cooling system, it is advantageous to provide for two separate cooling circuits which exchanges heat.

In an aspect of the invention, said one or more heat generating components are selected from the group consisting of: wind turbine gearboxes, wind turbine generators, electrical power handling equipment and control cabinets.

Gearbox, generator, electrical power handling equipment and control cabinets are typically the heat generating components of the wind turbine that are producing the most excess heat and it is therefore particularly advantageous to use a ejector cooling system for cooling one or more of these components.

The invention further provides for a method for cooling a heat generating component of a wind turbine, said method comprising the steps of:
- circulating a cooling fluid in a closed cooling circuit,
- directly or indirectly cooling said heat generating component by means of said cooling fluid, and
- reducing the temperature of said cooling medium by means of an ejector cooling system, wherein at least a part of the heat for operating said ejector cooling system is directly or indirectly provided by a heat generating component of said wind turbine.

Using heat from one or more heat generating component to operate an ejector cooling system for cooling a heat generating component is advantageous, in that the more heat there is produced, the more cooling is needed and the more heat can be provided to the ejector cooling system, thus making it more efficient the greater the demand is.

In an aspect of the invention, said wind turbine is a wind turbine according to any of the above-mentioned.

### Figures

The invention will be described in the following with reference to the figures in which
- fig. 1: illustrates a large modem wind turbine as known in the art,
- fig. 2: illustrates a simplified cross section of a nacelle, as seen from the side,
- fig. 3: illustrates a cross section of an embodiment of an ejector, as seen from the side,
- fig. 4: illustrates a pressure versus position co-ordinate system of the fluids in the ejector,
- fig. 5: illustrates a first embodiment of a closed cooling circuit comprising a an ejector cooling system,
- fig. 6: illustrates a second embodiment of a closed cooling circuit comprising a an ejector cooling system, and
- fig. 7: illustrates a third embodiment of a closed cooling circuit comprising a an ejector cooling system.

### Detailed description of related art

Fig. 1 illustrates a large modem wind turbine 1 as known in the art, comprising a tower 2 and a wind turbine nacelle 3 positioned on top of the tower 2. The wind turbine rotor 4 comprises three wind turbine blades 5 mounted on a common hub 6 which is connected to the nacelle 3 through the low speed shaft extending out of the nacelle 3 front. In another embodiment the wind turbine rotor 4 could comprise another number of blades 5 such as one, two, four, five or more.

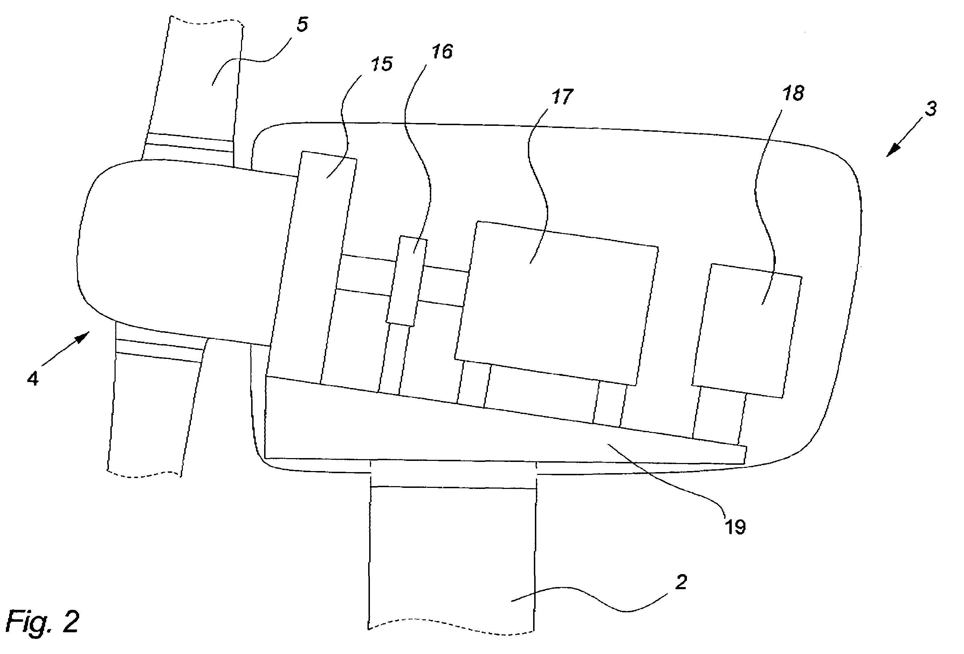

Fig. 2 illustrates a simplified cross section of a nacelle 3 of a prior art wind turbine 1, as seen from the side. Nacelles 3 exist in a multitude of variations and configurations but in most cases the drive train in the nacelle 3 almost always comprises one or more of the following components: a gearbox 15, a coupling (not shown), some sort of breaking system 16 and a generator 17. A nacelle 3 of a modern wind turbine 1 can also include a converter 18 (also called an inverter) and additional peripheral equipment such as further power handling equipment, control cabinets, hydraulic systems, and more.

The weight of the entire nacelle 3 including the nacelle components 15, 16, 17, 8 is carried by a nacelle structure 19. The components 15, 16, 17, 18 are usually placed on and/or connected to this common load carrying nacelle structure 19.

Most of the components in the nacelle 3 are heat generating components 6 in that they are electrically and/or mechanically active at least at some time during idling or normal operation of the wind turbine 1. In this embodiment the heat generating components 6 are the gearbox 15, generator 17, electrical power handling equipment such as the converter 18 and control cabinets (not shown) but in another embodiment the heat generating components 6 could further include bearings, lubrication systems, yaw or pitch motors and other motors.

Traditionally, the heat generating components 6 of the wind turbine 1 are either air cooled or cooled by a closed cooling circuit. Some control cabinets are e.g. air cooled simply by providing a fan which generates an airflow of air from the nacelle 3 or of air from the outside of the wind turbine 1 making the airflow pass the inside of the cabinet before it is exhausted into the nacelle 3 or to the outside of the nacelle 3.

A closed cooling circuit typically comprises a heat sink e.g. in form of a radiator with a fan mounted outside the nacelle 3 or arranged so that the fan can lead air from the outside of the nacelle 3 through the radiator. The circuit further comprises a pump for circulating a cooling fluid in the closed cooling circuit hereby enabling that the fluid flows from the radiator and past or through one or more heat generating components 6 hereby raising the temperature of the cooling fluid before the heated cooling fluid returns to the heat sink to be cooled again.

### Detailed description of the invention

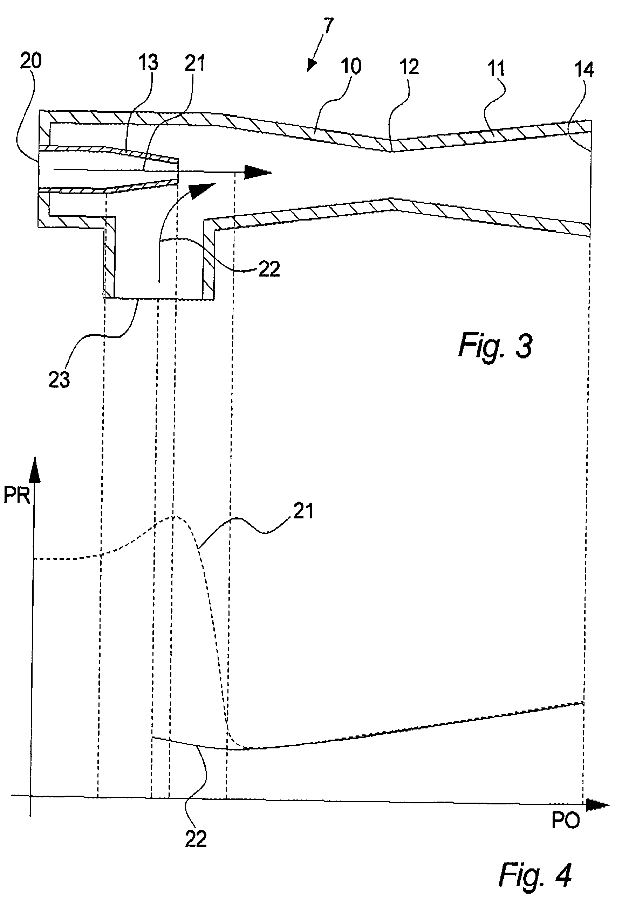

Fig. 3 illustrates a cross section of an embodiment of an ejector 7, as seen from the side.

An ejector 7 is a pump-like device that uses the Venturi effect of a converging-diverging nozzle 10, 11 to convert the pressure energy of a motive fluid 21 to velocity energy which creates a low pressure zone that draws in and entrains a suction fluid 22. After passing through the throat 12 of the ejector 7, the mixed fluid 21, 22 expands and the velocity is reduced which results in recompressing the mixed fluids 21, 22 by converting velocity energy back into pressure energy.

In this embodiment the motive fluid 21 is a high pressure steam but in another embodiment the motive fluid 21 may be any kind of liquid or gas.

In this embodiment the entrained inlet suction fluid 22 is low pressure steam but in another embodiment the inlet fluid 22 may be a gas, a liquid, a slurry, or a dust-laden gas stream.

The ejector 7 consists of a motive fluid inlet nozzle 13 and a converging-diverging outlet nozzle 10, 11. The Venturi effect, a particular case of Bernoulli's principle, applies to the operation of the ejector 7. Fluid 21, 22 under high pressure is converted into a high-velocity jet at the throat 12 of the convergent-divergent nozzle 10, 11 which creates a low pressure at that point. The low pressure draws the inlet suction fluid 22 into the convergent-divergent nozzle 10, 11 where it mixes with the motive fluid 21.

In essence, the pressure energy of the motive fluid 21 is converted to kinetic energy in the form of velocity heat at the throat 12 of the convergent-divergent nozzle 10, 11. As the mixed fluid then expands in the divergent diffuser 11, the kinetic energy is converted back to pressure energy at the ejector outlet 14 in accordance with Bernoulli's principle.

Fig. 4 illustrates a pressure PR versus position PO co-ordinate system of the fluids 21, 22 in the ejector 7. The abscissa axis shows the pressure PR and the ordinate axis relates to the position PO in ejector 7 indicated by the dotted lines extending from fig. 3. The pressure PO of the motive fluid 21 is illustrated by the graph in a dotted line and the inlet fluid 22 is illustrated by the graph in the solid line.

The diagram shows that the high pressure motivating fluid 21 enters the ejector 7 at the motive fluid inlet 20 where it is pushed through the motive fluid inlet nozzle 13 under increasing pressure. Under reducing pressure the motive fluid 21 leaves the inlet nozzle 13 and expands while moving into the converging nozzle 10. The suction fluid 22 enters the ejector 7 at the suction fluid inlet 23 and mixes with the motivating fluid 21 trough the converging nozzle 10. Both the motivating fluid 21 and the suction fluid 22 are then recompressed through the diverging diffuser 11 to the ejector outlet 14.

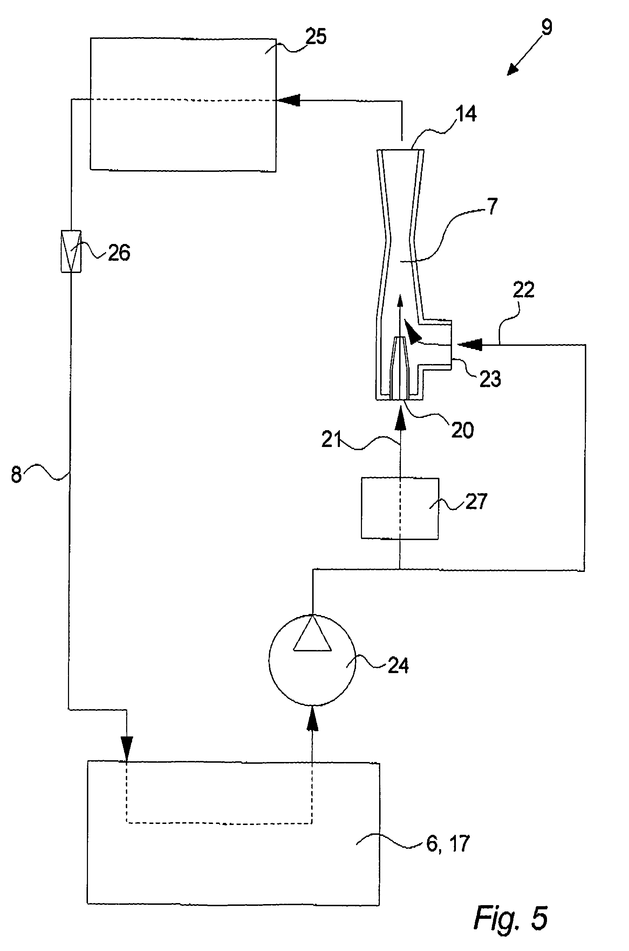

Fig. 5 illustrates a first embodiment of a closed cooling circuit 8 comprising an ejector cooling system 9.

In this embodiment of the invention a wind turbine 1 is provided with a closed cooling circuit 8 arranged to directly cool a heat generating component 6 which in this case is the wind turbine generator 17 which transforms the rotational energy from the rotor 4 into electrical power to be supplied to a utility grid.

In this embodiment of the invention the closed cooling circuit 8 is arranged to only cool the wind turbine generator 17 but in another embodiment of the invention the closed cooling circuit 8 could be arranged to cool other heat generating components 6 of the wind turbine 1 such as the wind turbine gearbox or gearboxes 15, electrical power handling equipment such as the converter 18, power resistors, motherboards, control cabinets or other or the closed cooling circuit 8 could be arranged to cool more than one of these components 6.

In this embodiment of the invention water is circulated as the cooling medium in the cooling circuit 8 but in another embodiment of the invention the cooling medium could be any kind of frost-proof water or brine, ammoniac, CO2, Freon gases or any other kind of liquid or gas suitable for transporting heat in a closed two-phase cooling system.

In this embodiment of the invention the cooling medium passes the heat generating component 6 to absorb some of the heat generated by the component 6 and transport it away from the component 6. When the cooling medium enters the generator 17 it is in liquid phase L but when the temperature of the water is increased through the generator 17 a phase change starts to happen and when the water leaves the generator 17 some of the water has vaporised. The liquid/gas cooling medium thereafter runs through a pump which increases the pressure of the cooling medium to further promote the phase change so that the cooling medium is now in gas form.

After the pump, a portion of the cooling medium is extracted and directed in the direction of the motive fluid inlet 20 of the ejector 7. Before this portion reaches the ejector 7 it passes a heating device 27 which significantly increases the pressure of this portion of the cooling medium making it the motive fluid 21 of the ejector. To ensure that the cooling medium is moving in the right direction through the heating device in direction of the ejector 7, the cooling circuit 8 or the heating device 27 could further be provided with a one-way valve.

In this embodiment the heating devise 27 is simply an electrical heating element arranged so that the cooling medium portion is significantly heated when it passes the device 27 but in another embodiment the heating device 27 could be a heat pump, a device comprising an open flame such as a furnace or any other device suitable for raising the temperature and the pressure of the motive fluid 21.

Meanwhile, the rest of the cooling medium - in the form of low pressure steam - is directed towards the suction fluid inlet 23 to become the suction inlet fluid 22 of the ejector 7. In the ejector 7 the two fluids 21, 22 are now mixed and when they leave the ejector 7, the pressure and temperature of the cooling medium are significantly higher than when it left the pump 27.

From the ejector 7 the steam is directed through a condenser 25 arranged to promote that the cooling medium changes phase back to liquid form. The condenser 25 could e.g. be a radiator or a heat exchanger arranged to give off heat to the surrounding of the wind turbine 1 such as the surrounding air or, in case of an off-shore wind turbine 1, the surrounding sea.

From the condenser 25 the relatively cold liquid cooling medium is directed through an expansion valve 26 which relieves the pressure of the liquid to further reduce the temperature of the cooling medium before it again enters the heat generating component 6.

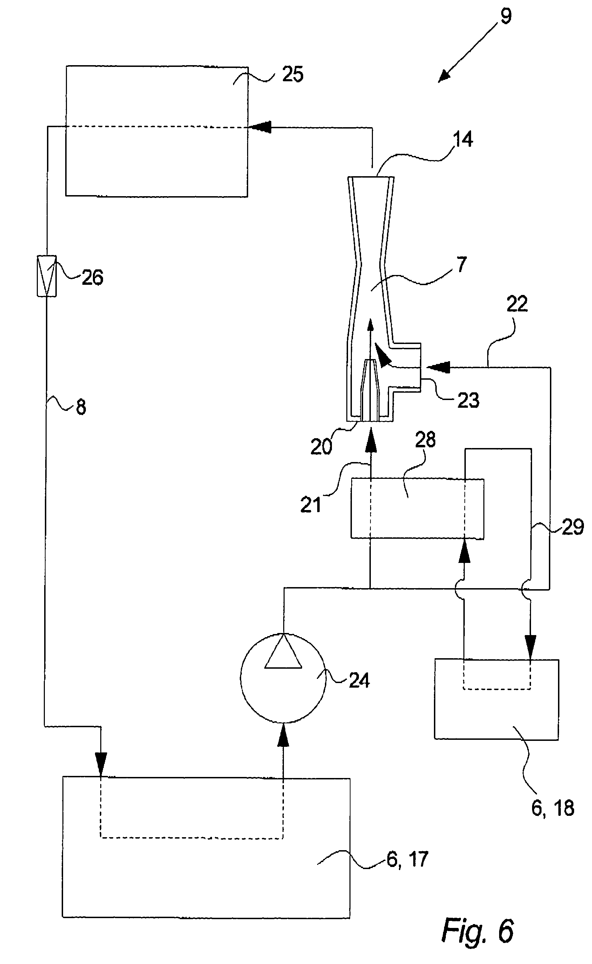

Fig. 6 illustrates a second embodiment of a closed cooling circuit 8 comprising an ejector cooling system 9.

In principle this ejector cooling system 9 functions in the same way as the one disclosed in fig. 5 but in this embodiment the pressure of the portion of cooling medium extracted before it enters the ejector 7 is increased by making the portion pass through a motive fluid heat exchanger 28. This heat exchanger 28 is a part of a closed heating circuit 29 for transporting heat from a further heat generating component 6 of the wind turbine 1 to the motive fluid 21 in the closed cooling circuit 8.

In this embodiment the heat generating component 6 is a convertor of the wind turbine 1 but in another embodiment this further heat generating component 6 could be any of the components 6 or any of the components 6 previously listed as being heat generating component 6.

In this embodiment of the invention the heat generating component 6 is arranged to only exchange heat with the motive fluid 21 but in another embodiment the closed heating circuit 29 could further be arranged to give off heat to the surroundings of the wind turbine or to other wind turbine equipment.

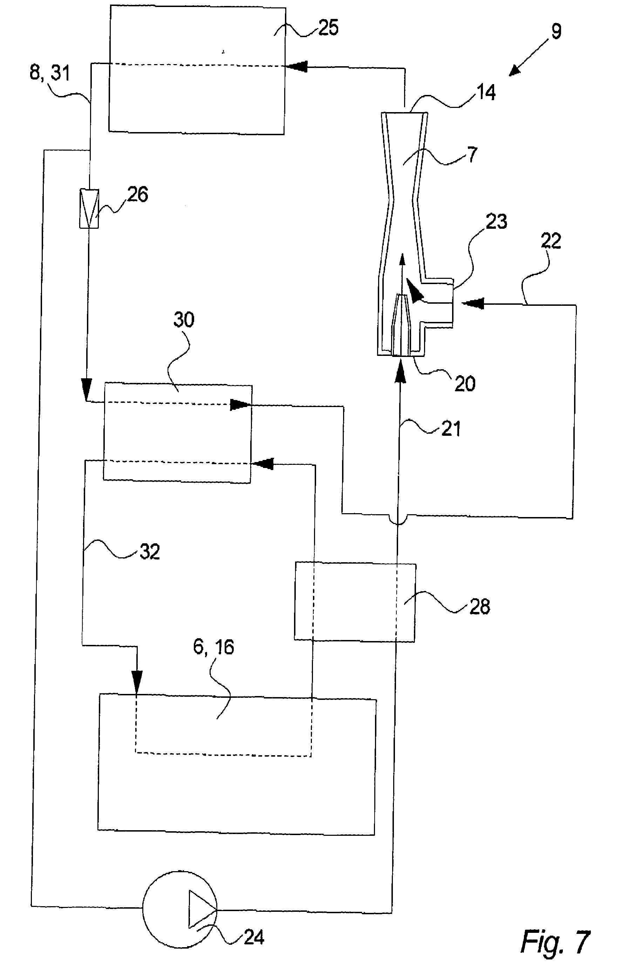

Fig. 7 illustrates a third embodiment of a closed cooling circuit 8 comprising an ejector cooling system 9.

In this embodiment of the invention the wind turbine comprises a first closed cooling circuit 8, 31 arranged to exchange heat with a second closed cooling circuit 32 by means of a cooling circuit heat exchanger 30.

In this embodiment of the invention the heat generating component 6 is a wind turbine gearbox 16 arranged between the rotor 4 and the generator 17 to increase the rotational speed of the main shaft.

Since the heat generating component 6 is the gearbox 16, the cooling medium circulating in the second closed cooling circuit 32 is in this case at least a part of the oil of the gearbox 16 provided to lubricate the bearings, gears and other mechanical components of the gearbox and to cool the gearbox 16. However, in another embodiment of the invention the cooling medium circulating in the second closed cooling circuit 32 could be any of the types of cooling medium previously mentioned.

At least during operation of the gearbox the gearbox oil is constantly circulated in the second closed cooling circuit 32 e.g. by means of a pump (not shown) enabling that the temperature of the oil first is reduced by passing the motive fluid heat exchanger 28 and thereafter by passing the cooling circuit heat exchanger 30.

In principle the ejector cooling system 9 of the first closed cooling circuit 8, 31 functions in the same way as the one disclosed in fig. 5 and fig 6 but in this embodiment the portion of the cooling medium which is used as the motive fluid 21 of the ejector 7 is extracted after the cooling medium passes the condenser 25 and before it reaches the expansion valve 26.

It is evident to the skilled person that the pressures and the temperatures of the cooling medium has to vary around the cooling circuit 6 to make the two-phase cooling system function effectively and that these temperatures and pressures would be different for different cooling mediums and that they could vary under different operating conditions e.g. if the cold wind turbine is starting up, shutting down or operating under normal circumstances. In this embodiment the cooling medium is water which demands that the ejection cooling system 9 and the closed cooling circuits 8, 31, 32 would function as follows;

When the portion of water is extracted after it leaves the condenser 25, the water is liquid, the temperature is approximately 10°C and the pressure is approximately 34 mbar (34 thousandth of one Bar). The water is then lead through a pump 24 which increases the pressure to 400 mbar and the temperature slightly to around 12°C. The water is still liquid until it passes the motive fluid heat exchanger 28 which in this case functions as an evaporator in that it raises the temperature of the water making it evaporate into 75°C hot steam ready to enter the ejector 7 as the motive fluid 21.

The main portion of the water - which is not extracted after the condenser 25 - continues through the expansion valve 26 which reduces the pressure to approximately 11 mbar and the temperature to approximately 0°C. The very cold water then continues through the cooling circuit heat exchanger 30 which in this case functions as an evaporator in that it raises the temperature of the water to 8°C making it evaporate into low pressure steam ready to enter the ejector 7 as the suction inlet fluid 22.

In the ejector 7 the two fluids are mixed and leave the ejector 7 as 26°C hot steam at a pressure of 34 mbar. The steam is then condensed in the condenser 25 making the cooling fluid leave the condenser 25 as 10°C liquid water.

In the second closed cooling circuit 32 the oil leaves the gearbox 16 at a temperature of e.g. 90°C before it is cooled to e.g. 50°C in the motive fluid heat exchanger 28. Hereafter, the oil passes the cooling circuit heat exchanger 30 which further reduces the temperature of the oil to e.g. 30°C before it enters the gearbox 16.
The invention has been exemplified above with reference to specific examples of ejectors 7, closed cooling circuit 8, 29, 31, 32, ejector cooling systems 9 and other. However, it should be understood that the invention is not limited to the particular examples described above but may be designed and altered in a multitude of varieties within the scope of the invention as specified in the claims.

### List

- 1.: Wind turbine
- 2.: Tower
- 3.: Nacelle
- 4.: Rotor
- 5.: Blade
- 6.: Heat generating component
- 7.: Ejector
- 8.: Closed cooling circuit
- 9.: Ejector cooling system
- 10.: Converging nozzle
- 11.: Diverging diffuser
- 12.: Throat
- 13.: Motive fluid inlet nozzle
- 14.: Ejector outlet
- 15.: Gearbox
- 16.: Braking system
- 17.: Generator
- 18.: Converter
- 19.: Nacelle structure
- 20.: Motive fluid inlet
- 21.: Motive fluid
- 22.: Suction inlet fluid
- 23.: Suction fluid inlet
- 24.: Pump
- 25.: Condenser
- 26.: Expansion valve
- 27.: Heating device
- 28.: Motive fluid heat exchanger
- 29.: Closed heating circuit
- 30.: Cooling circuit heat exchanger
- 31.: First closed cooling circuit
- 32.: Second closed cooling circuit
- PO.: Position
- PR.: Pressure

## Claims

1. A wind turbine (1) comprising
one or more heat generating components (6),
at least one closed cooling circuit (8) comprising a circulating cooling medium,
said cooling circuit being arranged to directly or indirectly cool one or more of said heat generating components, and
wherein an ejector cooling system (9) reduces the temperature of said cooling medium and wherein one or more of said heat generating components are arranged to provide at least a part of the heat for operating said ejector cooling system, and wherein said cooling circuit is arranged to cool a first heat generating component of said one or more heat generating components and wherein at least a part of said heat for operating said ejector cooling system is directly or indirectly provided by a second heat generating component of said one or more heat generating components.

2. A wind turbine according to claim 1, wherein said ejector cooling system comprises an ejector (7) for increasing the pressure of said cooling medium in said at least one closed cooling circuit and wherein said ejector increases the pressure of said cooling medium between 5 and 5000 %, preferably between 50 and 1000 % and most preferred between 100 and 500 %.

3. A wind turbine according to claim 2, wherein said ejector comprises a motive fluid inlet (13) and wherein a motive fluid introduced through said motive fluid inlet during normal operation of said ejector is a portion of said cooling medium or created from a portion of said cooling medium.

4. A wind turbine according to claim 3, wherein a pressure of said portion of said cooling medium is increased by means of a pump (24).

5. A wind turbine according to claim 4, wherein said pressure of said portion is arranged to be increased while said cooling fluid is in a liquid phase.

6. A wind turbine according to any of claims 3 to 5, wherein said ejector cooling system comprises a heating device (27) arranged for increasing the pressure of said motive fluid before it enters said motive fluid inlet.

7. A wind turbine according to any of the preceding claims, wherein said cooling circuit is arranged to cool a first heat generating component of said one or more heat generating components and wherein at least a part of said heat for operating said ejector cooling system is directly or indirectly provided by said first heat generating component of said one or more heat generating components.

8. A wind turbine according to any of the preceding claims, wherein said ejector cooling system comprises a condenser (25) for promoting a phase change of said cooling medium.

9. A wind turbine according to any of the preceding claims, wherein said ejector cooling system comprises an expansion valve (26) for relieving a pressure of said cooling medium.

10. A wind turbine according to any of the preceding claims, wherein said cooling medium is water.

11. A wind turbine according to any of the preceding claims, wherein said wind turbine comprises at least two closed cooling circuits and wherein a first cooling circuit (31) of said at least two closed cooling circuits is arranged to directly cool said heat generating components and a second cooling circuit (32) of said at least two closed cooling circuits comprises said ejector cooling system and wherein said first cooling circuit and said second cooling circuit are arranged to exchange heat.

12. A wind turbine according to any of the preceding claims, wherein said one or more heat generating components (6) are selected from the group consisting of: wind turbine gearboxes, wind turbine generators, electrical power handling equipment and control cabinets.

13. A method for cooling a heat generating component of a wind turbine, said method comprising the steps of:
• circulate a cooling fluid in a closed cooling circuit,
• directly or indirectly cooling said heat generating component by means of said cooling fluid, and
• reducing the temperature of said cooling medium by means of an ejector cooling system, wherein at least a part of the heat for operating said ejector cooling system is directly or indirectly provided by a heat generating component of said wind turbine,
wherein said cooling circuit is arranged to cool a first heat generating component of said one or more heat generating components and wherein at least a part of said heat for operating said ejector cooling system is directly or indirectly provided by a second heat generating component of said one or more heat generating components.

14. A method for cooling a heat generating component of a wind turbine according to claim 13, wherein said wind turbine is a wind turbine according to any of claims 1 to 12.

## Patentansprüche

1. Windturbine (1), die umfasst:
eine oder mehrere wärmeerzeugenden Komponenten (6),
mindestens einen geschlossenen Kühlkreislauf (8), der ein zirkulierendes Kühlmedium umfasst,
wobei der Kühlkreislauf angeordnet ist, um direkt oder indirekt eine oder mehrere der wärmeerzeugenden Komponenten zu kühlen, und
wobei eine Ejektorkühlsystem (9) die Temperatur des Kühlmediums vermindert und wobei eine oder mehrere der wärmeerzeugenden Komponenten angeordnet sind, um mindestens einen Teil der Wärme bereitzustellen, um das Ejektorkühlsystem zu betreiben, und wobei der Kühlkreislauf angeordnet ist, um eine erste wärmeerzeugende Komponente der einen oder der mehreren wärmeerzeugenden Komponenten zu kühlen und wobei mindestens ein Teil der Wärme zum Betreiben für das Ejektorkühlsystem von einer zweiten wärmeerzeugende Komponente der einen oder der mehreren wärmeerzeugenden Komponenten direkt oder indirekt bereitgestellt wird.

2. Windturbine nach Anspruch 1, wobei das Ejektorkühlsystem einen Ejektor (7) umfasst, um den Druck des Kühlmediums in dem mindestens einen geschlossenen Kühlkreislauf zu erhöhen, und wobei der Ejektor den Druck des Kühlmediums auf einen Bereich zwischen 5 und 5.000 %, vorzugsweise zwischen 50 und 1.000 % und am stärksten bevorzugt auf einen Bereich zwischen 100 und 500 % erhöht.

3. Windturbine nach Anspruch 2, wobei der Ejektor einen Einlass (13) für ein Antriebsfluid umfasst, und wobei ein Antriebsfluid, das durch den Einlass für ein Antriebsfluid während eines normalen Betriebs des Ejektors eingeführt wird, ein Teil des Kühlmediums ist oder aus einem Teil des Kühlmediums erzeugt wird.

4. Windturbine nach Anspruch 3, wobei ein Druck des Teils des Kühlmediums mittels einer Pumpe (24) erhöht wird.

5. Windturbine nach Anspruch 4, wobei der Druck des Teils angeordnet ist, um erhöht zu werden, während das Kühlfluid in einer flüssigen Phase ist.

6. Windturbine nach einem der Ansprüche 3 bis 5, wobei das Ejektorkühlsystem eine Heizvorrichtung (27) umfasst, die angeordnet ist, um den Druck des Antriebsfluids zu erhöhen, bevor dieses in den Einlass für das Antriebsfluid eintritt.

7. Windturbine nach einem der vorhergehenden Ansprüche, wobei der Kühlkreislauf angeordnet ist, um eine erste wärmeerzeugende Komponente der einen oder der mehreren wärmeerzeugenden Komponenten zu kühlen, und wobei mindestens ein Teil der Wärme zum Betreiben für das Ejektorkühlsystem von der ersten wärmeerzeugende Komponente der einen oder der mehreren wärmeerzeugenden Komponenten direkt oder indirekt bereitgestellt wird.

8. Windturbine nach einem der vorhergehenden Ansprüche, wobei das Ejektorkühlsystem einen Kondensator (25) umfasst, um einen Phasenwechsel des Kühlmediums zu fördern.

9. Windturbine nach einem der vorhergehenden Ansprüche, wobei das Ejektorkühlsystem ein Entspannungsventil (26) umfasst, um einen Druck des Kühlmediums zu entlasten und abzubauen.

10. Windturbine nach einem der vorhergehenden Ansprüche, wobei das Kühlmedium Wasser ist.

11. Windturbine nach einem der vorhergehenden Ansprüche, wobei die Windturbine mindestens zwei geschlossene Kühlkreisläufe umfasst, und wobei ein erster Kühlkreislauf (31) der mindestens zwei geschlossenen Kühlkreisläufe angeordnet ist, um die wärmeerzeugenden Komponenten direkt zu kühlen, und wobei ein zweiter Kühlkreislauf (32) der mindestens zwei geschlossenen Kühlkreisläufe das Ejektorkühlsystem umfasst, und wobei der erste Kühlkreislauf und der zweite Kühlkreislauf angeordnet sind, um Wärme auszutauschen.

12. Windturbine nach einem der vorhergehenden Ansprüche, wobei die eine oder die mehreren wärmeerzeugenden Komponenten (6) ausgewählt sind aus der Gruppe, die aus Folgendem besteht: Windturbinengetriebe, Windturbinengeneratoren, Ausrüstung für den Umgang mit elektrischer Energie und Steuerschränke.

13. Verfahren zum Kühlen einer wärmeerzeugenden Komponente einer Windturbine, wobei das Verfahren die folgenden Schritte umfasst:
• ein Kühlfluid in einem geschlossenen Kühlkreislauf zirkulieren zu lassen,
• direkt oder indirekt die wärmeerzeugende Komponente mittels des Kühlfluids zu kühlen, und
• Vermindern der Temperatur des Kühlmediums mittels eines Ejektorkühlsystems, wobei mindestens ein Teil der Wärme zum Betreiben des Ejektorkühlsystems direkt oder indirekt von einer wärmeerzeugenden Komponente der Windturbine bereitgestellt wird,
wobei der Kühlkreislauf angeordnet ist, um eine erste wärmeerzeugende Komponente der einen oder der mehreren wärmeerzeugenden Komponenten zu kühlen und wobei mindestens ein Teil der Wärme zum Betreiben für das Ejektorkühlsystem von einer zweiten wärmeerzeugende Komponente der einen oder der mehreren wärmeerzeugenden Komponenten direkt oder indirekt bereitgestellt wird.

14. Verfahren zum Kühlen einer wärmeerzeugenden Komponente einer Windturbine nach Anspruch 13, wobei die Windturbine eine Windturbine nach einem der Ansprüche 1 bis 12 ist.

## Revendications

1. Eolienne (1) comprenant
un ou plusieurs composants générant de la chaleur (6),
au moins un circuit de refroidissement fermé (8) comprenant un agent de refroidissement circulant,
ledit circuit de refroidissement étant agencé pour refroidir directement ou indirectement un ou plusieurs desdits composants générant de la chaleur et dans laquelle un système de refroidissement éjecteur (9) réduit la température dudit agent de refroidissement et dans laquelle un ou plusieurs desdits composants générant de la chaleur sont agencés pour fournir au moins une partie de la chaleur pour faire fonctionner ledit système de refroidissement éjecteur, et dans laquelle ledit circuit de refroidissement est agencé pour refroidir un premier composant générant de la chaleur desdits un ou plusieurs composants générant de la chaleur et dans laquelle au moins une partie de ladite chaleur pour faire fonctionner ledit système de refroidissement éjecteur est fournie directement ou indirectement par un second composant générant de la chaleur desdits un ou plusieurs composants générant de la chaleur.

2. Eolienne selon la revendication 1, dans laquelle ledit système de refroidissement éjecteur comprend un éjecteur (7) pour augmenter la pression dudit agent de refroidissement dans ledit au moins un circuit de refroidissement fermé et dans laquelle ledit éjecteur augmente la pression dudit agent de refroidissement entre 5 et 5 000 %, de préférence entre 50 et 1000 % et de manière préférée entre toutes entre 100 et 500 %.

3. Eolienne selon la revendication 2, dans laquelle ledit éjecteur comprend une entrée de fluide moteur (13) et dans laquelle un fluide moteur introduit par ladite entrée de fluide moteur pendant un fonctionnement normal dudit éjecteur est une partie dudit agent de refroidissement ou créé à partir d'une partie dudit agent de refroidissement.

4. Eolienne selon la revendication 3, dans laquelle une pression de ladite partie dudit agent de refroidissement est augmentée au moyen d'une pompe (24).

5. Eolienne selon la revendication 4, dans laquelle ladite pression de ladite partie est agencée pour être augmentée alors que ledit fluide de refroidissement est dans une phase liquide.

6. Eolienne selon l'une quelconque des revendications 3 à 5, dans laquelle ledit système de refroidissement éjecteur comprend un dispositif de chauffage (27) agencé pour augmenter la pression dudit fluide moteur avant qu'il n'entre dans ladite entrée de fluide moteur.

7. Eolienne selon l'une quelconque des revendications précédentes, dans laquelle ledit circuit de refroidissement est agencé pour refroidir un premier composant générant de la chaleur desdits un ou plusieurs composants générant de la chaleur et dans laquelle au moins une partie de ladite chaleur pour faire fonctionner ledit système de refroidissement éjecteur est directement ou indirectement fournie par ledit premier composant générant de la chaleur desdits un ou plusieurs composants générant de la chaleur.

8. Eolienne selon l'une quelconque des revendications précédentes, dans laquelle ledit système de refroidissement éjecteur comprend un condenseur (25) pour promouvoir un changement de phase dudit agent de refroidissement.

9. Eolienne selon l'une quelconque des revendications précédentes, dans laquelle ledit système de refroidissement éjecteur comprend une valve d'expansion (26) pour relâcher une pression dudit agent de refroidissement.

10. Eolienne selon l'une quelconque des revendications précédentes, dans laquelle ledit agent de refroidissement est de l'eau.

11. Eolienne selon l'une quelconque des revendications précédentes, dans laquelle ladite éolienne comprend au moins deux circuits de refroidissement fermés et dans laquelle un premier circuit de refroidissement (31) desdits au moins deux circuits de refroidissement fermés est agencé pour refroidir directement lesdits composants générant de la chaleur et un second circuit de refroidissement (32) desdits au moins deux circuits de refroidissement fermés comprend ledit système de refroidissement éjecteur et dans laquelle ledit premier circuit de refroidissement et ledit second circuit de refroidissement sont agencés pour échanger la chaleur.

12. Eolienne selon l'une quelconque des revendications précédentes, dans laquelle lesdits un ou plusieurs composants générant de la chaleur (6) sont sélectionnés dans le groupe constitué de : multiplicateurs d'éolienne, génératrices d'éolienne, équipement de tenue en puissance électrique et armoires de commande.

13. Procédé de refroidissement d'un composant générant de la chaleur d'une éolienne, ledit procédé comprenant les étapes de :
- circulation d'un fluide de refroidissement dans un circuit de refroidissement fermé,
- refroidissement direct ou indirect dudit composant générant de la chaleur au moyen dudit fluide de refroidissement, et
- réduction de la température dudit agent de refroidissement au moyen d'un système de refroidissement éjecteur, dans lequel au moins une partie de la chaleur pour faire fonctionner ledit système de refroidissement éjecteur est fournie directement ou indirectement par un composant générant de la chaleur de ladite éolienne,
dans lequel ledit circuit de refroidissement est agencé pour refroidir un premier composant générant de la chaleur desdits un ou plusieurs composants générant de la chaleur et dans lequel au moins une partie de ladite chaleur pour faire fonctionner ledit système de refroidissement éjecteur est fournie directement ou indirectement par un second composant générant de la chaleur desdits un ou plusieurs composants générant de la chaleur.

14. Procédé de refroidissement d'un composant générant de la chaleur d'une éolienne selon la revendication 13, dans lequel ladite éolienne est une éolienne selon l'une quelconque des revendications 1 à 12.
